# EUROPÄISCHE PATENTSCHRIFT

(11) **EP 0 830 015 B1**
(45) Veröffentlichungstag und Bekanntmachung des Hinweises auf die Patenterteilung: **06.06.2007**
(21) Anmeldenummer: 97202693.4
(22) Anmeldetag: 02.09.1997
(51) Int. Cl.: H04N 5/253

(54) **Filmabtaster mit Daten-Interface**
Telecine having a data interface
Appareil de télécinéma avec interface de données

(30) Priorität: 11.09.1996 DE 19636788
(43) Veröffentlichungstag der Anmeldung: 18.03.1998
(73) Patentinhaber: BTS Holding International B.V., 4827 HG Breda (NL)
(72) Erfinder: Fach, Reinhard, Dipl.-Ing., Röntgenstrasse 24, 22335 Hamburg (DE)
(74) Vertreter: Lindemann, Robert

(56) Entgegenhaltungen:
- WO-A-95/32582
- DE-A- 4 016 928
- FR-A- 2 642 599
- US-A- 4 689 683
- US-A- 4 786 979
- US-A- 5 296 936
- EPSTEIN D A ET AL: "THE IBM POWER VISUALIZATION SYSTEM: A DIGITAL POST-PRODUCTION SUITEIN A BOX" SMPTE JOURNAL, Bd. 104, Nr. 3, 1.März 1995, Seiten 125-133, XP000495985
- TOLMIE D ET AL: "HIPPI: SIMPLICITY YIELDS SUCCESS" IEEE NETWORK: THE MAGAZINE OF COMPUTER COMMUNICATIONS, Bd. 7, Nr. 1, 1.Januar 1993, Seiten 28-32, XP000560595
- "PROPOSED SMPTE STANDARD FOR TELEVISION AND AUDIO EQUIPMENT - ESLAN-1 REMOTE CONTROL SYSTEM" SMPTE JOURNAL, Bd. 103, Nr. 11, 1.November 1994, Seiten 770-775, XP000475182
- SENGE M.; CHRISTMANN M.; MASSMANN V.: 'High speed film scanning: resolution independent film-mastering' BROADCASTING CONVENTION, INTERNATIONAL (CONF. PUBL. NO. 428) AMSTERDAM; NETHERLANDS 12 September 1996, LONDON, UK,IEE, UK, Seiten 381 - 385, XP006510050

## Beschreibung

Die Erfindung betrifft eine Vorrichtung zur Abtastung von Filmen mit einer Umwandlungsvorrichtung zur Bildung eines Bilddatensignals.

Gattungsgemäße Filmabtaster tasten mit einem optoelektronischen Wandler die aufeinanderfolgenden Bilder eines Kinofilms ab und erzeugen dabei ein entsprechend der Bildinformation der Filmbilder moduliertes Videosignal, das einem bestimmten Fernsehübertragungsstandard (z. B. NTSC, PAL, SECAM) genügt. Derartige Standardvideosignale können von Computern nicht empfangen und nicht direkt verarbeitet werden. Aus diesem Grund wandelt man mit sogenannten Videograbbern die analogen oder digitalen Standardvideosignale in formatierte Daten um, die von gekoppelten Computern verarbeitet werden können. Die Auflösung solcher digitalen Videosignale genügt jedoch nicht professionellen Anwendungen. Außerdem ist die Datenübertragungsrate solcher digitalen Videosignale beispielsweise für hoch aufgelöste Bildvorlagen ungeeignet.

Aus der WO 95/32582 ist Filmabtaster bekannt, der mit einem Video Server oder einer Video Processing Vorrichtung kombiniert ist. Der Video Server des bekannten Filmabtasters ermöglicht es, die Abtastung des Films nur einmal vorzunehmen und nachfolgende Bearbeitungsschritte an dem in dem Video Server gespeicherten Bildsignal vorzunehmen.

Aus der FR 2 642 599 ist eine Vorrichtung zur Abtastung von kinematographischen Filmen bekannt, bei welcher mehrere Filmabtaster, eine Bildbearbeitungsvorrichtung und eine Filmbelichtungseinheit mittels dreier bidirektionaler Schnittstellen verkoppelt sind, so dass abgetastete und bearbeitete Bilder aufgezeichnet werden können.

Aus dem Artikel "The IBM Visualization System: A Digital Post-production in a Box", David A. Epstein et al., SMPTE Journal March 1995, ist die Benutzung von Schnittstellen nach dem HIPPI-Standard zur Verbindung von Geräten zur Bildbearbeitung bekannt.

Aus der US 4,689,683 ist ein System bekannt, bei dem videotechnische Geräte, unter anderem ein Filmabtaster, bidirektional, d'.h. sende- und empfangsmäßig, mittels eines analogen Ringbusses hoher Bandbreite und eines digitalen Ringbusses niedriger Bandbreite untereinander verbunden sind. Videosignale werden bei dem bekannten System über den analogen Ringbus übertragen.

Aus der nachveröffentlichten Schrift von M. Senge, M. Christmann, V. Massmann: "High speed film scanning: resolution independent film-mastering", International Broadcasting Conference (Conf. Publ. No. 428) Amsterdam; Netherlands, 12. 16. September 1996, Seiten 381 - 385, XP006510050 London, UK, IEE, UK ist ein Filmabtaster mit einer Datenschnittstelle nach dem HIPPI-Standard bekannt.

Die Aufgabe der Erfindung ist es daher, eine Vorrichtung zur Abtastung von Filmen zu schaffen, die Datenübertragung zwischen dem Filmabtaster und einem gekoppelten Computernetzwerk verbessert.

Die Aufgabe wird durch die Vorrichtung nach Anspruch 1 und das Verfahren nach Anspruch 5 gelöst.

Diese Aufgabe wird beim Gegenstand der Erfindung dadurch gelöst, daß eine Ausgabe des Bilddatensignals über eine erste Datenschnittstelle der Umwandlungsvorrichtung in einem Datenformat für eine einkanalige Übertragung vorgesehen ist. Bei Filmabtastern sind meist mehrere Verbindungen zu einem gekoppelten Gerät (beispielsweise ein digitaler Recorder zum Aufzeichnen der Bilddatensignale) vorhanden. Neben dem Bilddatensignal mit den Informationen über den Inhalt des abgetasteten Filmbildes werden mittels einer zweiten Verbindung Kontroll- und Steuerdaten, wie beispielsweise Zustandsinformationen über die gekoppelten Geräte (z. B., ob der Recorder bereit ist oder das entsprechende Speichermedium eingelegt ist) bidirektional ausgetauscht. Die Umwandlungsvorrichtung des erfindungsgemäßen Filmabtasters erzeugt ein Bilddatensignal mit einem Datenformat, das lediglich eine Verbindung benötigt. Zur Übertragung der Bilddatensignale eines abgetasteten Bildes vom Filmabtaster zu einer weiterverarbeitenden Stufe ist ein Übertragungskanal ausreichend, so daß weitere Übertragungskanäle, insbesondere für Rückmeldungen zum Filmabtaster, wegfallen können. Damit wird insbesondere eine deutlich höhere Übertragungsrate erzielt.

In einer bevorzugten Ausführungsform der Erfindung entspricht die erste Datenschnittstelle einem HIPPI-PH-Standard und das Datenformat einem durch Weglassen von Größenangaben über einen zweiten Bereich (D1_Area) in einem ersten Bereich (Header_Area) modifizierten HIPPI-FP-Standard. Der HIPPI-PH-Standard (High-performance parallel interface, mechanical, electrical and signalling protocol specification) nach ANSI X3.183-1991 legt eine 32-bit breite, physikalische Schnittstelle fest. Der dazugehörige HIPPI-FP-Standard für das Datenübertragungsformat über diese Schnittstelle spezifiziert das Protokoll des Datentransfers (High-performance parallel interface, framing protocol). Ein Datenpaket nach dem HIPPI-FP-Standard besteht aus den drei Bereichen Header_Area, D1_Area und D2_Area. Der im HIPPI-Standard festgeschriebene zweite Bereich (D1_Area) wird bei dem erfindungsgemäß eingesetzten Datenformat nicht verwendet. Daher kann auch die Information über die Größe des zweiten Bereiches (D1_Area) im ersten Bereich (Header_Area) wegfallen. Im Bereich D1_Area werden gemäß HIPPI-FP-Standard Steuerinformationen (bzw. Zustandsinformationen) über den HIPPI-Kanal ausgetauscht. Bei der erfindungsgemäß modifizierten Übertragung werden lediglich die Bilddaten übertragen, so daß sowohl der Bereich D1_Area selber als auch die Größeninformation über ihn nicht übertragen werden müssen. Daher bleibt der HIPPI-FP-Standard als Rahmen für ein übertragenes Datenpaket zwar erhalten, während das Datenformat innerhalb dieses Rahmen jedoch modifiziert wird. Durch einen erfindungsgemäßen Filmabtaster mit einer ersten Datenschnittstelle nach dem HIPPI-PH-Standard zur Übertragung eines Bilddatensignals in einem modifizierten Datenformat innerhalb des Datenübertragungsprotokolls des HIPPI-FP-Standards werden am Ausgang des Filmabtasters hochaufgelöste Bildinformationsdaten zur Verfügung gestellt. Die Bildinformationsdaten in einem solchen Format können von gekoppelten Computern (beispielsweise von Silicon Graphics oder Sun) empfangen und verarbeitet werden. Die Übertragungsgeschwindigkeit wird dabei nicht durch eine synchrone Videoübertragung, sondern durch die Bandbreite des Eingabekanals des Computers bestimmt. Derartige Computer werden vorzugsweise in den Bereichen TV Commercials, Post-Production oder digitalem Mastering für TV-Distribution eingesetzt.

Für eine Fortbildung der Erfindung ist zur Übertragung von Steuerdaten zwischen der Umwandlungsvorrichtung und einer gekoppelten Vorrichtung eine zweite, bidirektionale Datenschnittstelle an der Umwandlungsvorrichtung vorgesehen. Im Gegensatz zu den Bildinformationsdaten werden die Steuerdaten auf einem weniger breitbandigen Datenkanal bidirektional übertragen. Hier ist eine bidirektionale Verbindung sinnvoll, wobei ein weniger breitbandiger Übertragungskanal für die Menge von Steuerdaten ausreicht. Damit ist eine Reduzierung auf eine einkanalige Übertragung der Bilddatensignale ohne Verlust von Informationen und damit eine erhebliche Reduzierung des Übertragungsaufwandes möglich.

In einer Weiterbildung des erfindungsgemäßen Filmabtasters ist für die zweite Datenschnittstelle der Umwandlungsvorrichtung eine Ethernet-Standard-Schnittstelle mit einem Datenübertragungsprotokoll ESlan-1 vorgesehen. Die Ethernet-Standardschnittstelle mit dem Datenübertragungsprotokoll ESlan-1 ist bekannt, so daß die Übertragung der Steuerdaten problemlos realisierbar ist und die Bildinformationsdatenübertragung entlastet wird. Im Gegensatz zur ersten Datenschnittstelle muß die Übertragung der Steuerdaten bidirektional ausgelegt werden, da Informationen von einem angeschlossenen Gerät, wie zum Beispiel einem Aufzeichnungsgerät (digitaler Recorder) oder einem Kontrollbildschirm, über Störungen oder allgemeine Zustände als Rückmeldungen übertragen werden müssen. Hierfür wird die Übertragung nach Ethernet-Standard benutzt, weil diese günstig realisierbar und leicht handhabbar ist. Jeder andere Übertragungskanal, der für eine bidirektionale Übertragung geeignet ist, kann ebenfalls verwendet werden, wobei vorteilhafterweise auf eine möglichst schmalbandige Auslegung geachtet werden sollte.

Vorteilhafterweise ist bei einer weiteren Ausgestaltung der Erfindung die Ausgabe der Bilddatensignale in wenigstens einem Datenformat für Consumer-Anwendungen vorgesehen. Das Datenformat des Bilddatensignals eines abgetasteten Filmbildes innerhalb des vorgeschriebenen Bereiches in einem Datenpaket nach HIPPI-Standard ist wählbar. Damit weist die Erfindung den Vorteil auf, daß auch Datenformate für Consumer-Anwendungen (z. B. das Druckformat Tag Image File Format, TIFF) erzeugt werden können, die durch Setzen bestimmter Parameter im HIPPI-Protokoll gekennzeichnet werden. Mit diesem Merkmal kann der erfindungsgemäße Filmabtaster auch Bilddaten für verbreitete Anwendungen im Multimedia-Bereich liefern.

In einer bevorzugten Ausführungsform des erfindungsgemäßen Filmabtasters sind wenigstens eine Transporteinrichtung zum Bewegen des Films in Längsrichtung, wenigstens ein optoelektronischer Wandler zur Umsetzung von Filmbildern in ein elektrisches Bildsignal, wenigstens eine Bildsignalverarbeitungseinrichtung und wenigstens eine Steuereinrichtung für die Transporteinrichtung, den optoelektronischen Wandler und die Bildsignalverarbeitungseinrichtung vorgesehen.

Weiterhin betrifft die Erfindung noch ein Verfahren zur Bildung eines Bilddatensignals in einer Umwandlungsvorrichtung in einem Filmabtaster, das die gestellte Aufgabe dadurch löst, daß eine Ausgabe des Bilddatensignals über eine erste Datenschnittstelle der Umwandlungsvorrichtung in einem Datenformat für eine einkanalige Übertragung vorgesehen ist. Im Gegensatz zu bekannten Übertragungsverfahren von Bilddatensignalen werden erfindungsgemäß Steuerdaten auf einem separaten Übertragungskanal übertragen. Daher wird das Format für die zu übertragenden Daten dahingehend abgewandelt, daß die Umwandlungsvorrichtung Bilddatensignal generiert und über die erste Datenschnittstelle ausgibt, das lediglich die Bildinformation des abgetasteten Filmbildes enthält und so eine einkanalige Übertragung ermöglicht. Für die Übertragung kann beispielsweise der HIPPI-Standard verwendet werden, wobei die Daten innerhalb des HIPPI-FP-Standarddatenformats für eine einkanalige Übertragung modifiziert werden.

Des weiteren bezieht sich die Erfindung noch auf ein Bilddatensignal in einer Umwandlungsvorrichtung in einem Filmabtaster, mit dem die gestellte Aufgabe dadurch gelöst wird, daß das Bilddatensignal in einem Datenformat für eine einkanalige Übertragung vorliegt. Da im Bilddatensignal nur noch die Bildinformation des abgetasteten Filmbildes vorliegt, wird in einem Datenpaket, beispielsweise nach HIPPI-Standard, lediglich der dafür vorgesehene Bereich zur Übertragung benötigt. In diesen Bereich, der zur Übertragung der Bildinformationen, beispielsweise innerhalb des HIPPI-Datenpaketes, vorgesehen ist, können die Bildinformationen auch insbesondere in einem wählbaren Format eingefügt werden, so daß beispielsweise Datenformate übertragen werden, die zur Verwendung in Consumer-Anwendungen geeignet sind.

Ein Ausführungsbeispiel der Erfindung soll im folgenden anhand von Zeichnungen näher erläutert werden. Dabei zeigen
- Fig. 1 :: eine schematische Darstellung eines erfindungsgemäßen Filmabtasters mit funktioneller Beschreibung der beteiligten Vorrichtungen,
- Fig. 2A:: eine Tabelle mit einem ersten Teil des Aufbaus eines Datenpaketes nach dem standardisierten DPX-Format,
- Fig. 2B:: eine Tabelle mit einem zweiten Teil des Aufbaus eines Datenpaketes nach dem standardisierten DPX-Format,
- Fig. 2C:: eine Tabelle mit einem anwenderspezifischen Teil des Aufbaus eines Datenpaketes nach dem standardisierten DPX-Format,
- Fig. 3 :: eine schematische Darstellung des standardisierten Bilddatenformates Tag Image File Format (TIFF) und
- Fig. 4 :: das Format eines Datenpaketes gemäß dem Datenübertragungsprotokoll nach einem modifizierten HIPPI-FP-Standard.

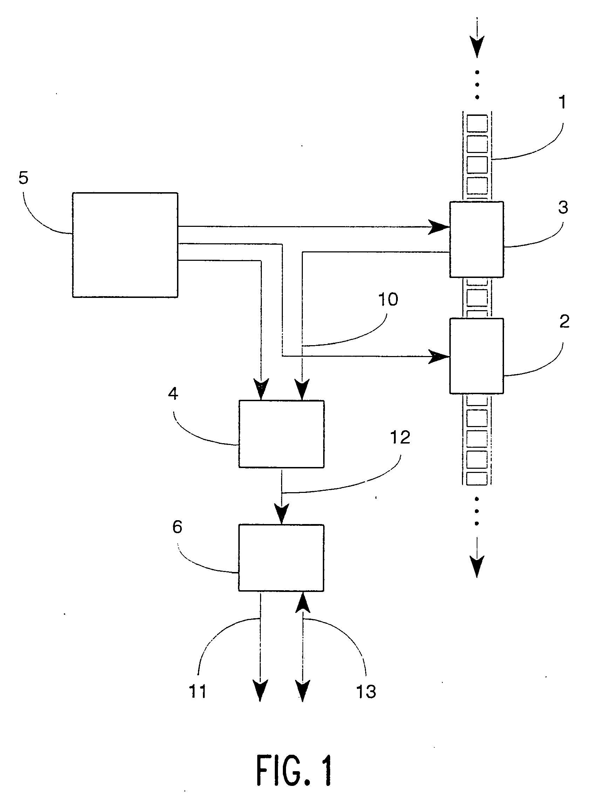

Die schematische Darstellung in Figur 1 zeigt den erfindungsgemäßen Filmabtaster, bei dem ein abzutastender Film 1 mittels einer Transporteinrichtung 2 durch einen optoelektronischen Wandler 3 bewegt wird. Der optoelektronische Wandler 3 tastet nacheinander die aufeinanderfolgenden Filmbilder des Filmes 1 ab und bildet entsprechend der Bildinformationen der Filmbildern ein elektrisches Bildsignal 10. Dieses elektrische Bildsignal 10 wird an eine gekoppelte Bildsignalverarbeitungseinrichtung 4 übertragen. Die Transporteinrichtung 2, der optoelektronische Wandler 3 und die Bildsignalverarbeitungseinrichtung 4 werden von einer Steuereinrichtung 5 überwacht und geregelt. Die Steuereinrichtung 5 steuert den Transport des Filmes 1 und aktiviert den optoelektronischen Wandler 3, sobald ein Filmbild abgetastet werden soll. Außerdem regelt die Steuereinrichtung 5 die Übertragung des elektrischen Bildsignals 10 vom optoelektronischen Wandler 3 zur Bildsignalverarbeitungseinrichtung 4 und reagiert mittels einer Kontrollfunktion auf Fehlermeldungen der gekoppelten Baugruppen. Mit der Bildsignalverarbeitungseinrichtung 4 ist eine Umwandlungsvorrichtung 6 zur Bildung eines Bilddatensignals 11 aus dem elektrischen Bildsignal 10 gekoppelt. Die Umwandlungsvorrichtung 6 erzeugt aus den analogen Standard-Videosignalen 12 der Bildsignalverarbeitungseinrichtung 4 digitale Videosignale 11. Innerhalb dieser digitalen Videosignale 11 stehen hochaufgelöste Bildinformationsdaten zur Verfügung, die über eine modifizierte Standard-HIPPI-Schnittstelle an eine folgende Verarbeitungsstufe übertragen werden können. Außerdem gibt die Umwandlungsvorrichtung 6 noch Steuer- und Zustandsdaten 13 über eine zweite Datenschnittstelle aus, für die eine vorhandene oder leicht zu installierende Ethernet-Schnittstelle verwendet wird. Die Steuer- und Zustandsdaten 13 werden bidirektional nach dem Datenübertragungsprotokoll ESlan-1 ausgetauscht. Auf diesem Weg kann ein angeschlossener digitaler Recorder, der die digitalen Videosignale 11 des Filmabtasters aufzeichnet, mit der Umwandlungsvorrichtung 6 kommunizieren. Dabei liefert die Umwandlungsvorrichtung 6 Steuerungsinformationen 13 für den Recorder und dieser gibt entsprechende Rückmeldungen oder Zustandsinformationen 13 zurück.

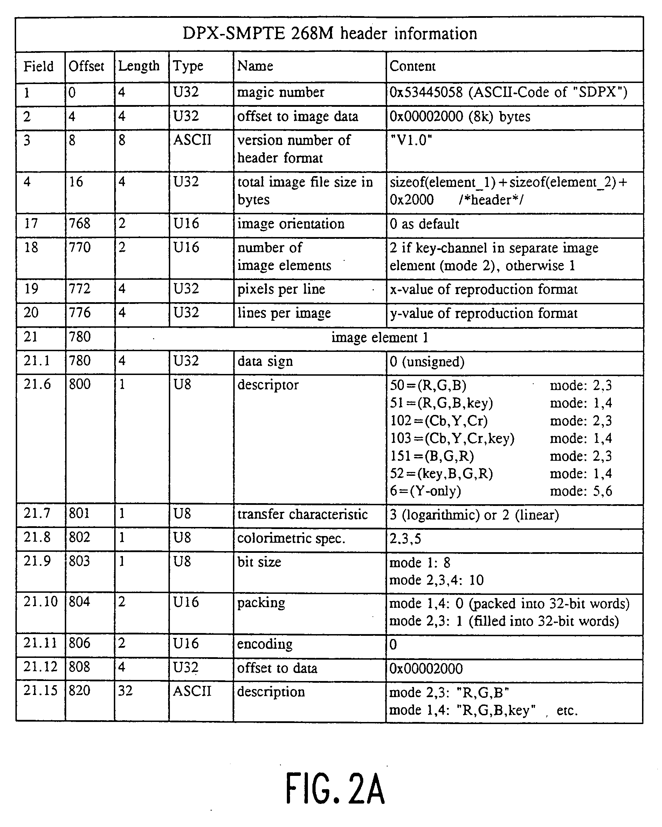

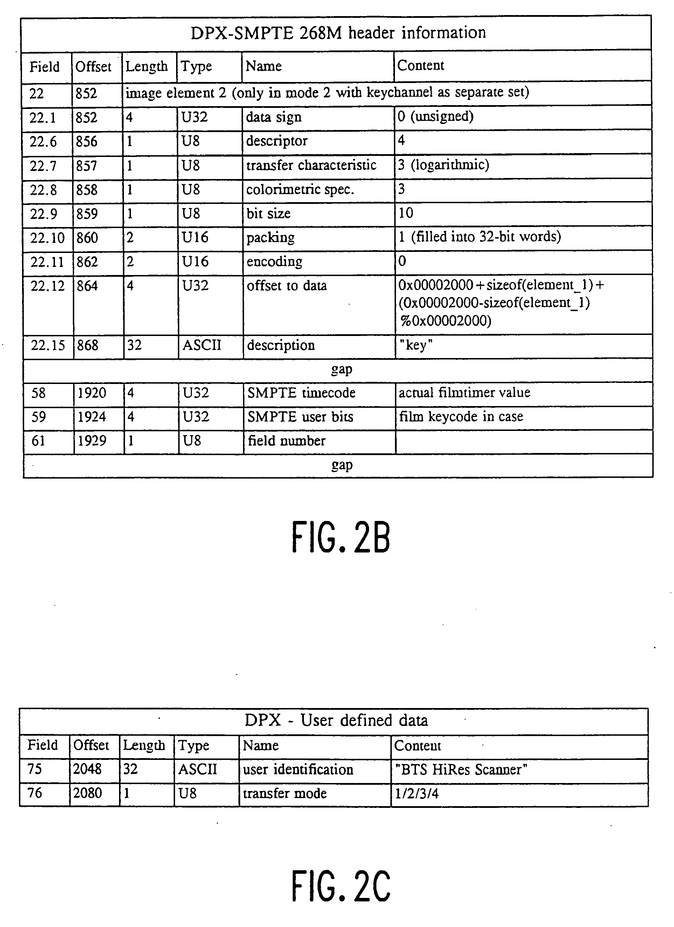

Dabei kann das Format der innerhalb des HIPPI-FP-Standards übertragenen Bildinformationsdaten unterschiedlich gewählt werden. Der Filmabtaster stellt die Daten beispielsweise im bekannten DPX-Format (Digital Picture Exchange Format) zur Verfügung, das in den Figuren 2A, 2B und 2C dargestellt ist. Die Tabellen zeigen die Gliederung und den Inhalt eines voranstehenden Headers eines Datenpaketes mit den Bildinformationsdaten eines abgetasteten Filmbildes bei Verwendung des DPX-SMPTE-Formates (Society of Motion Pictures Transfer Engineers). Dies ist ein standardisiertes Datenformat für den Austausch von digitalen Bilddaten, das neben den Bildinformationsdaten wie beispielsweise der Anzahl der Zeilen pro Bild oder der Anzahl der Bildpunkte auch Zusatzinformationen wie die Art des abgetasteten Filmes (positiv oder negativ) oder den Aufnahmewinkel der Kamera beim abgetasteten Bild beinhalten kann. In Figur 2A und 2B ist die inhaltliche Struktur des im Standard festgelegten, allgemeinen Teils des Headers angegeben. Daneben werden in einem zweiten, anwenderspezifischen Teil auf den erfindungsgemäßen Filmabtaster bezogene Informationen geliefert. In Figur 2C ist dieser Teil dargestellt, in dem eine "User identification" für das verwendete Gerät mit der HIPPI-Schnittstelle und eine Kennung für den verwendeten "Transfer mode", d. h. die Methode der Umsetzung von digitalen Daten in den 32-bit breiten HIPPI-Kanal, geliefert wird. Insgesamt kann die Größe eines kompletten Datenpaketes für ein Filmbild bis zu mehreren GByte betragen.

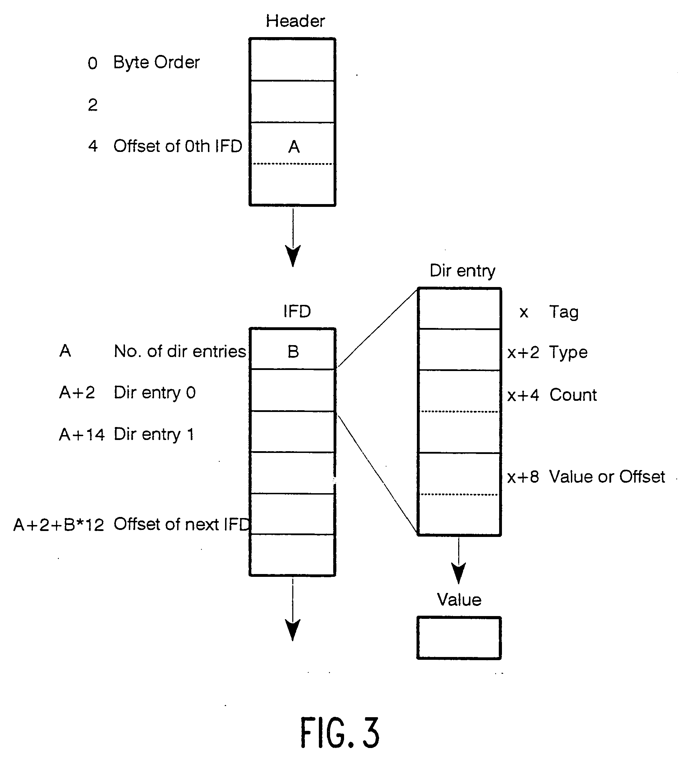

In Figur 3 ist eine schematische Darstellung des standardisierten TIF-Formates (Tag Image File Fomat) angegeben, mit dem die Bildinformationsdaten des abgetasteten Filmbildes ebenfalls übertragen werden können. Dieses ebenfalls standardisierte Datenformat wird vor allem als Druckformat in Consumer-Anwendungen benutzt. Eine TIFF-Datei beginnt mit einem 8-byte Bilddatei-Header, der einen Pointer (Zeiger) auf ein Image File Directory (IFD) enthält. In diesem IFD sind Informationen über das Bild selber und wiederum Pointer auf die Bilddaten abgelegt. Die maximale Länge einer solchen Bilddatendatei beträgt bis zu 4 GByte.

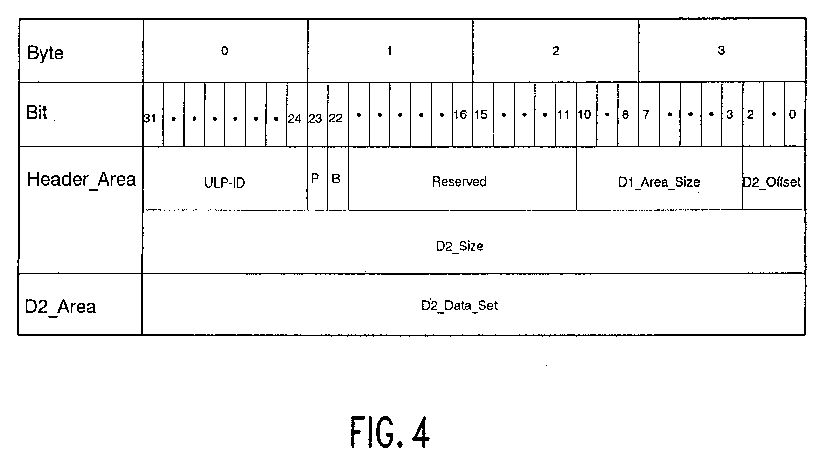

In der Tabelle in Figur 4 ist der Aufbau eines 32-bit breiten, modifizierten HIPPI-FP-Pakets dargestellt. Ein Datenpaket im standardisierten HIPPI-FP-Format enthält die drei Bereiche Header_Area, D1_Area und D2_Area. Beim erfindungsgemäßen Datenpaket nach dem HIPPI-FP-Format ist kein Bereich D1_Area vorhanden, so daß diese Kapazität eingespart werden kann. Dabei ist in dem HIPPI-FP-Paket die Bytereihenfolge entgegengesetzt zur Bitreihenfolge, so daß das LSB (Least Significant Bit) in Byte 3 und das MSB (Most Significant Bit) in Byte 0 steht. Zunächst folgt ein 32-Bit-Wort des Headerbereichs (Header_Area). Dabei steht ULP-ID für Upper-Layer-Protocol-Identifikation. Diese Information ist in Byte 0, d. h. in den Bits 31..24 festgelegt und kann durch eine Kontrolleinrichtung konfiguriert werden, wobei die Voreinstellung 10000000 ist (1xxxxxxx=locally assigned). Die ULP-ID gibt allgemein eine Identifikation für einen Softwareprozeß an, der vom übertragenen Datenpaket benutzt bzw. angesprochen werden sollen. Wenn ein Datenpaket von einer Workstation empfangen wird, die mehrere Prozessoren enthält, kann damit auch ein Prozessor ausgewählt werden, der die Verarbeitung der übertragenen Daten mit einem bestimmten Prozeß übernimmt. Beim erfindungsgemäßen Filmabtaster kann die ULP-ID in einem ausgegebenen Bilddatensignal 11 im modifizierten HIPPI-Format frei gewählt und eingestellt werden, so daß eine Anpassung an beliebige, gekoppelte Geräte bei Vermeidung von Kollisionen durch Zugriff von weiteren Geräten auf denselben Prozeß oder Prozessor ermöglicht wird.

Im Bit 23 ist mit P ein D1_Data_Set_Present gekennzeichnet, das auf '0' gesetzt ist. Damit wird gekennzeichnet, ob in einem Bereich D1_Area Daten vorhanden sind. Im Ausführungsbeispiel des erfindungsgemäß modifizierten Standards werden keine Daten in der D1_Area übertragen, so daß P=0 gesetzt wird. Im Bit 22 wird ein Start_D2_on_Burst_boundary festgelegt, das mit B abgekürzt ist und ebenfalls auf '0' gesetzt ist. Hiermit wird eine Information über den Startpunkt des Bereiches D2_Area geliefert. Der Bereich der D2_Area kann beispielsweise direkt am oder vor dem Beginn eines zweiten Bursts eines Datenpaketes beginnen, wobei ein Burst aus 256 Datenworten, was 1 kbyte entspricht, besteht. Die Information der D1_Area_Size befindet sich in den Bits 10..3 und beschreibt die Größe des Bereichs D1-Area. Wenn, wie im Fall des beim erfindungsgemäßen Filmabtaster verwendeten HIPPI-FP-Formates, kein Bereich D1_Area im Datenpaket vorhanden ist, ist diese Bitfolge, wie P, ebenfalls auf '0' gesetzt. Im Bereich D1_Area werden standardgemäß Kontroll- oder Zusatzdaten bidirektional übertragen, die meist eine Größe von 1 kByte besitzen. In den Bits 2 bis 0 wird eine Information D2_Offset über den Beginn der Daten des Bereichs D2_Area zur Verfügung gestellt. Dabei wird der Wert auf '0' gesetzt, wenn keine Verzögerung (Offset) vorliegt und die Daten direkt am Beginn des Bereichs D2_Area starten. Im Bereich Header_Area wird in Form eines weiteren 32-Bit-Wortes noch eine Information D2_Size geliefert, die die Länge der Daten in Bytes im Bereich D2_Area beschreibt, wobei nur die Nettomenge der Daten ohne Füllbits am Ende berücksichtigt wird. Die Größe von D2_Size liegt dabei zwischen 0 und 4 GByte - 2.

Für die Verbindung über die HIPPI-Schnittstelle werden zwei verschiedene Modi unterstützt. Die Modi "Datagram Mode" und "Stream Mode" können durch Übertragung entsprechender Steuerdaten über den Steuerkanal ausgewählt werden. Dabei baut der Filmabtaster im Stream Mode auf Anforderung eine einkanalige Verbindung auf und schickt mehrere Datenpakete über diese Verbindung. Dagegen wird im Datagram Mode über eine ebenfalls bei Bedarf aufgebaute einkanalige Verbindung nur ein einzelnes Datenpaket verschickt. Anschließend an die Übertragung des einzelnen Datenpaketes wird in diesem Modus die Verbindung automatisch wieder gelöst. In jedem Fall enthält jeweils ein Datenpaket die Bildinformationsdaten eines Filmbildes des abgetasteten Filmes.

## Patentansprüche

1. Vorrichtung zum Abtasten von Filmen (1) mit mindestens einem optoelektronischen Wandler (3) und einer Umwandlungsvorrichtung (6), an welche ein elektrisches Bildsignal (10) angelegt ist, wobei an der Umwandlungsvorrichtung (6) eine erste Schnittstelle (11) hoher Bandbreite und eine zweite Schnittstelle (13) niedriger Bandbreite vorgesehen sind, **dadurch gekennzeichnet, dass** die erste Schnittstelle (11) eine digitale, unidirektionale Schnittstelle ist, welche nur Bilddatensignale ausgibt, und dass die zweite Schnittstelle (13) eine, bidirektionale Schnittstelle ist, welche Steuer- und/oder Zustandsdaten empfängt und sendet, wobei die erste Schnittstelle (11) physikalisch dem HIPPI-PH Standard entspricht, wobei der Bereich für die Bilddaten durch Weglassen eines gemäß HIPPI-FP Standard Protokoll reservierten Bereichs (D1_Area) gegenüber dem HIPPI-FP Standard Protokoll vergrößert ist und **dadurch** die für die Bilddaten verfügbare Bandbreite der ersten Schnittstelle (11) gegenüber einer Schnittstelle mit Datenübertragung gemäß HIPPI-FP Standard Protokoll erhöht ist.

2. Vorrichtung nach Anspruch 1, **dadurch gekennzeichnet, dass** für die zweite Datenschnittstelle(13) der Umwandlungsvorrichtung (6) eine Ethernet-Standard-Schnittstelle mit einem Datenübertragungsprotokoll ESlan-1 vorgesehen ist.

3. Vorrichtung nach einem der Ansprüche 1 oder 2, **dadurch gekennzeichnet, dass** die Ausgabe des Bilddatensignals (11) in wenigstens einem Datenformat für Consumer-Anwendungen vorgesehen ist.

4. Vorrichtung nach einem der Ansprüche 1 bis 3, **dadurch gekennzeichnet, dass**
- wenigstens eine Transporteinrichtung (2) zum Bewegen des Films (1) in Längsrichtung,
- wenigstens ein optoelektronischer Wandler (3) zur Umsetzung von Filmbildern in ein elektrisches Bildsignal (10),
- wenigstens eine Bildsignalverarbeitungseinrichtung (4) und
- wenigstens eine Steuereinrichtung (5) für die Transporüerrichtung (2), den optoelektronischen Wandler (3) und die Bildsignalverarbeitungseinrichtung (4)
vorgesehen sind.

5. Verfahren zur Übertragung von Bilddatensignalen, Steuer- und/oder Zustandsinformationen mittels einer Umwandlungsvorrichtung (6) in einem Filmabtaster, wobei an der Umwandlungsvorrichtung (6) eine erste Schnittstelle (11) hoher Bandbreite und eine zweite Schnittstelle (13) niedriger Bandbreite vorgesehen sind, **dadurch gekennzeichnet, dass** Bilddatensignale ausschließlich über die erste Datenschnittstelle (11) in einem Datenformat für eine unidirektionale digitale Übertragung ausgegeben werden, und dass Steuer- und/oder Zustandsdaten über die zweite, bidirektionale Schnittstelle (13) gesendet und empfangen werden, wobei die erste Schnittstelle (11) physikalisch dem HIPPI-PH Standard entspricht, wobei für die Übertragung der Bilddaten ein im HIPPI-FP Protokoll hierfür reservierter Bereich durch Weglassen eines gemäß HIPPI-FP Standard reservierten Bereichs (D1_Area) gegenüber dem HIPPI-FP Standard vergrößert wird und **dadurch** die für die Bilddaten verfügbare Bandbreite der ersten Schnittstelle (11) gegenüber einer Schnittstelle gemäß HIPPI-FP Standard erhöht wird.

## Claims

1. Device for scanning films (1) with at least one opto-electronic transducer (3) and a converter (6) to which an electric image signal (10) is applied, wherein the converter (6) is provided with a first interface (11) of a high bandwidth and a second interface (13) of a low bandwidth, **characterized in that** the first interface (11) is a digital, unidirectional interface which puts out only image data signals, and that the second interface (13) is a bidirectional interface which sends and receives control and/or status data, wherein the first interface (11) physically corresponds with the HIPPI-PH standard, wherein the area for the image data is enlarged - versus the HIPPI-FP standard protocol - by means of the omission of an area (D1_Area) reserved in accordance with the HIPPI-FP standard protocol, and thereby the bandwidth of the first interface (11) available for the image data is increased versus an interface with data transfer according to the HIPPI-FP standard protocol.

2. Device according to claim 1, **characterized in that** an Ethernet standard interface with a data transfer protocol ESlan-1 is provided for the second data interface (13) of the converter (6).

3. Device according to any one of the claims 1 or 2, **characterized in that** the output of the image data signal (11) is provided in at least one data format for consumer applications.

4. Device according to any one of the claims 1 to 3, **characterized in that** the following is provided
- at least one transport device (2) for moving the film (1) in longitudinal direction;
- at least one opto-electronic transducer (3) for converting film images into an electric image signal (10);
- at least one image signal processing device (4); and
- at least one control device (5) for the transport device (2), the opto-electronic transducer (3) and the image signal processing device (4).

5. Method for the transmission of image data signals, control and/or status information by means of a converter (6) in a film scanner, wherein the converter (6) is provided with a first interface (11) of a high bandwidth and a second interface (13) of a low bandwidth, **characterized in that** image data signals are exclusively put out via the first data interface (11) in a data format for unidirectional digital transfer, and that control and/or status data are sent and received via the second, bidirectional interface (13), wherein the first interface (11) physically corresponds with the HIPPI-PH standard, wherein an area reserved in the WIPPI-FP protocol for the transfer of image data is enlarged - by means of the omission of an area (D1_Area) reserved in accordance with the HIPPI-FP standard - versus the HIPPI-FP standard, and thereby the bandwidth of the first interface (11) available for the image data is increased versus an interface according to the HIPPI-FP standard.

## Revendications

1. Dispositif d'analyse de films (1) avec au moins un convertisseur optoélectronique (3) et un dispositif de conversion (6), au niveau duquel un signal d'image électrique (10) est placé, dans lequel une première interface (11) à bande passante élevée et une deuxième interface (13) à faible bande passante sont prévues au niveau du dispositif de conversion (6), **caractérisé en ce que** la première interface (11) est une interface numérique unidirectionnelle qui émet uniquement des signaux de données d'image, et **en ce que** la deuxième interface (13) est une interface bidirectionnelle qui reçoit et envoie des données de commande et/ou d'état, dans lequel la première interface (11) satisfait de manière physique à la norme HIPPI-PH, dans lequel la zone pour les données d'image est agrandie par une suppression d'une zone (D1_Area) réservée conformément au protocole de la norme HIPPI-FP, par rapport au protocole de la norme HIPPI-FP, et de ce fait la bande passante de la première interface (11), disponible pour les données d'image, est augmentée par rapport à une interface avec une transmission de données conformément au protocole de la norme HIPPI-FP,

2. Dispositif selon la revendication 1, **caractérisé en ce qu'**une interface de norme Ethernet avec un protocole de transmission de données ESlan-1 est prévue pour la deuxième interface de données (13) du dispositif de conversion (6).

3. Dispositif selon une des revendications 1 ou 2, **caractérisé en ce que** l'émission du signal de données d'image (11) dans au moins un format de données est prévu pour des applications grand public.

4. Dispositif selon une des revendications 1 à 3, **caractérisé en ce que**
- au moins un dispositif de transport (2) pour le déplacement du film (1) dans la direction longitudinale,
- au moins un convertisseur optoélectronique (3) pour la conversion d'images de film en un signal d'image électrique (10),
- au moins un dispositif de traitement de signaux d'image (4) et
- au moins un dispositif de commande (5) pour le dispositif de transport (2), le convertisseur optoélectronique (3) et le dispositif de traitement de signaux d'image (4)
sont prévus.

5. Procédé pour la transmission de signaux de données d'image, d'informations de commande et/ou d'état au moyen d'un dispositif de conversion (6) dans un appareil de télécinéma, dans lequel une première interface (11) à bande passante élevée et une deuxième interface (13) à faible bande passante sont prévues au niveau du dispositif de conversion (6), **caractérisé en ce que** des signaux de données d'image sont émis exclusivement via la première interface de données (11) dans un format de données pour une transmission numérique unidirectionnelle, et **en ce que** des données de commande et/ou d'état sont envoyées et reçues via la deuxième interface bidirectionnelle (13), dans lequel la première interface (11) satisfait de manière physique à la norme HIPPI-PH, dans lequel une zone réservée pour la transmission des données d'image dans le protocole HIPPI-FP est agrandie par suppression d'une zone (D1_Area) réservée conformément à la norme HIPPI-FP, par rapport à la norme HIPPI-FP, et de ce fait la bande passante de la première interface (11), disponible pour les données d'image, est augmentée par rapport à une interface selon la norme HIPPI-FP.
